# EUROPEAN PATENT SPECIFICATION

(11) **EP 1 374 368 B1**
(45) Date of publication and mention of the grant of the patent: **31.08.2005**
(21) Application number: 02742867.1
(22) Date of filing: 28.03.2002
(51) Int. Cl.: H02K 1/00

(54) **COUPLING AND BRAKE COMBINATION**
BREMS-KUPPLUNG ANORDNUNG
COMBINAISON ACCOUPLEMENT ET FREIN

(30) Priority: 02.04.2001 DE 20105746 U
(43) Date of publication of application: 02.01.2004
(73) Proprietor: Chr. Mayr GmbH & Co. KG, D-87665 Mauerstetten (DE)
(72) Inventor: EBERLE, Johann, 87669 Irsee (DE); EIBAND, Karl, 87616 Marktoberdorf (DE); HECHT, Martin, 87600 Kaufbeuren (DE)
(74) Representative: Ruschke, Hans Edvard
(86) International application number: PCT/EP2002/003548
(87) International publication number: WO 2002/084841

(56) References cited:
- EP-A- 0 786 852
- WO-A-99/47827
- DE-A- 19 954 590
- US-A- 3 338 349

## Description

Safety brakes which release upon the application of an electric current and which operate by means of spring pressure when the current is removed, are in general known. They are usually mounted on the rear side of the motor, generally an electric motor, on the so-called B-bearing side.

In countless technical installations for example lifts, it is required by the regulations to include a safety brake which in the event of a fault for example, a power cut, immediately brings the system to a standstill, and holds it in this condition until the fault has been repaired. The inclusion of such brakes means additional installation work, and requires more space.

Flexible bellow couplings that are stiff in the rotational direction, are known for connecting two shafts. They are mainly installed between an electric motor and a drive coupling, working machine, spindle or the like.

EP-A-0 786 852 shows an electric drive unit comprised of a regular electric motor in combination with an electromagnetically releasable spring pressure brake coupled to the motor's shaft end and attached to the front end of the motor. The spring pressure brake presses an axially displaceable armature plate by spring force against a brake disk and a brake surface, wherein the brake disk is coupled to a sleeve element attached to the motor shaft in order to rotate with it. The sleeve element is connected to a pulley or similar output element provided on the sleeve element. The latter does not connect the motor shaft with a second shaft nor is it able to compensate for a high degree of misalignment between drive and driven shafts.

In a similar manner, US Patent 3,338,349 also shows an electric drive unit comprised of a regular electric motor in combination with an electromagnetically releasable spring pressure brake coupled to the motor's shaft end and attached to the front end of the motor. The spring pressure brake presses an axially displaceable armature ring (which serves as a brake disk) against a brake surface, wherein the brake disk is coupled to a sleeve element attached to the motor shaft to rotate with it. The sleeve element extends into a separate output shaft. While the sleeve element connects the motor shaft with said second shaft it is unable to compensate for any degree of misalignment between the drive shaft and driven shaft.

The object of the present invention is to unite a coupling and a brake into a unit, a so-called brake coupling combination in such a way that this unit can be mounted in a simple manner on the drive side of an electric motor (A-bearing side). The aim is in particular, to reduce the work and space requirement. Additionally, costs need to be saved, reliability increased, ease of servicing improved. Preferably the arrangement should be able to compensate for a high degree of misalignment between drive and driven shafts.

This task is solved by the combination of features described in claim 1. The second side of the coupling transfers the angular momentum to the second shaft. With this arrangement space is saved in the axial direction. The stiffness to rotation of a bellows coupling can absorb at the same time axial, radial and angular misalignment. Further, the housing of the safety brake may be constructed in a generally rectangular shape, so that the usual shape of electric servomotors is preserved. By mounting the brake on the drive motor shaft rather that on the rear end of the motor an improvement in safety is achieved. For example if the brake hub becomes disconnected from the motor shaft due to a mechanical failure, in the arrangement of the invention, the drive becomes disconnected too. This is a "fail-safe" situation, and is due to the fact that the drive passes from the motor shaft to the drive external equipment via the brake hub.

An exemplary embodiment of a brake coupling combination, in accordance with the invention will now be described with reference to the drawings in which:
Figure 1 shows a simplified elevation of the coupling-brake combination;
Figure 2 shows a cross-section on the line A-A in Figure 1 and shows more detail;
Figure 3 shows an exploded partly cross sectional view showing coupling of the coupling brake combination to the motor shaft; and
Figure 4 shows a spring clip for use in the arrangement of Figures 1-3.

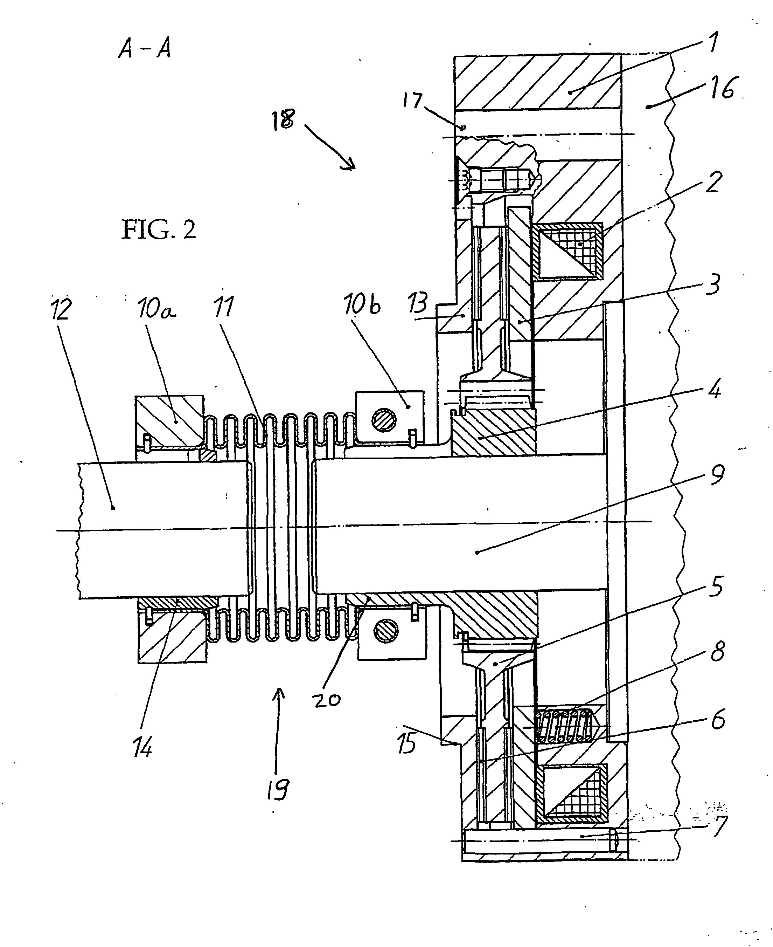

Referring to Figure 2, a brake-coupling combination is intended to be flanged or screwed on to an electric motor 16 at the A bearing side i.e. the end from which the drive shaft emerges. In Figure 2 the motor shaft is shown, with the reference numeral 9. The brake coupling combination essentially consists of a brake assembly 18 and a coupling assembly 19. The brake possesses a square flange 1, with which it is screwed to a correspondingly shaped part,
for example to the A-bearing case of a servomotor, or the motor housing. The flange 1 serves at the same time as a housing for the brake, and accommodates the many individual parts thereof. Typically the brake coupling assembly is bolted onto the motor 16 by four bolts, one of which passes through bore 17. The bolts are not shown in Figure 2.

The brake assembly 18 itself consists of an electromagnet coil 2; an armature plate 3; a hub 4 with a partially axially slit tube-like extension 20, the hub 4 is connected to the motor shaft 9 such that relative rotation is not possible. This may be achieved for example by use of a key in a keyway, or other conventional means such as a taper or cross pin.

The brake also includes at least one brake disk 5 which is longitudinally displaceable with respect to the hub 4 but which is connected to it such as to turn with it. The brake disk 5 is sandwiched between the armature plate 3 and a flange plate 13 which is longitudinally fixed with respect to the housing of the brake. Brake pads 6 are mounted on either the brake disk itself or on the surfaces of the armature and flange plate facing it to increase friction between these components. Typically the hub 4 carries on its outer circumference, splines which engage inwardly facing teeth on a boss in the centre of the brake disk 5. The brake assembly 18 also has at least two brake pads 6, disposed on the two sides of the brake disk 5. The brake also includes a plurality of guide pins 7 disposed and equally distributed around the circumference to ensure good alignment of the moving parts in operation. Springs 8 also disposed and equally distributed around the circumference urge the armature plate towards the flange plate, and hence into the braking condition. The brake pads 6 may be fixed to the brake disk, so as to engage the inwardly facing surfaces of the armature plate 3, and a flange plate 13 on the other side of the brake disk 5. Alternatively the brake pads can be on the mutually facing surfaces of the armature plate 3 and the flange plate 13.

The shaft 9 of the motor 16 passes through the hub 4 including the partially axially slit tube-like extension 20 and into the coupling unit 19 of the coupling brake combination.

The coupling unit 19 couples the motor drive shaft 9 with a driven shaft 12 connecting to other machines and consists of flexible bellows 11 (made of metal), by a locking ring 10b locked onto the motor shaft 9 via the tube-shaped axially slit extension 20 of the hub 4 at one end and on a correspondingly adapted coupling hub 14 that is in turn locked onto a driven shaft 12, at the other end.

The flange plate 13 as well as holding the brake together, and providing the reaction force, also offers the possible connection of drive transmission by means of a centering adjustment 15.

In operation, when the electromagnet coil 2 is excited it attracts the armature plate 3 thereby pulling the armature plate 3 away from the brake disk. Once there is no longer any frictional contact between the armature plate 3, the brake disk 5, the brake pads 6 and the flange plate 13 there is no braking effect. If the electricity supply to the electromagnet coil 2 is interrupted, the armature plate 3 is released, and is immediately moved in the direction of the brake disk 5 and flange plate 13, by the springs 8. As the brake disk 5 is free to move longitudially on the splines on the hub 4, it moves in the direction of the flange plate 13, balancing the braking effect on the two sides of the brake disk.

The flexible bellows 11 are movable in all directions and can compensate for any kind of misalignment of the shafts, axial, radial and angular. By the attachment by the locking rings 10 or 10' (radially slit and clamped by a screw not shown in more detail), the flexible bellows 11 can be secured on the short end of the shaft so that space can be saved. The locking rings 10, 10' in addition, achieve a locking of the bellows and the locking between the hub 4 and the drive shaft 9 on the one hand, and the coupling hub 14 and the drive shaft 12 on the other hand

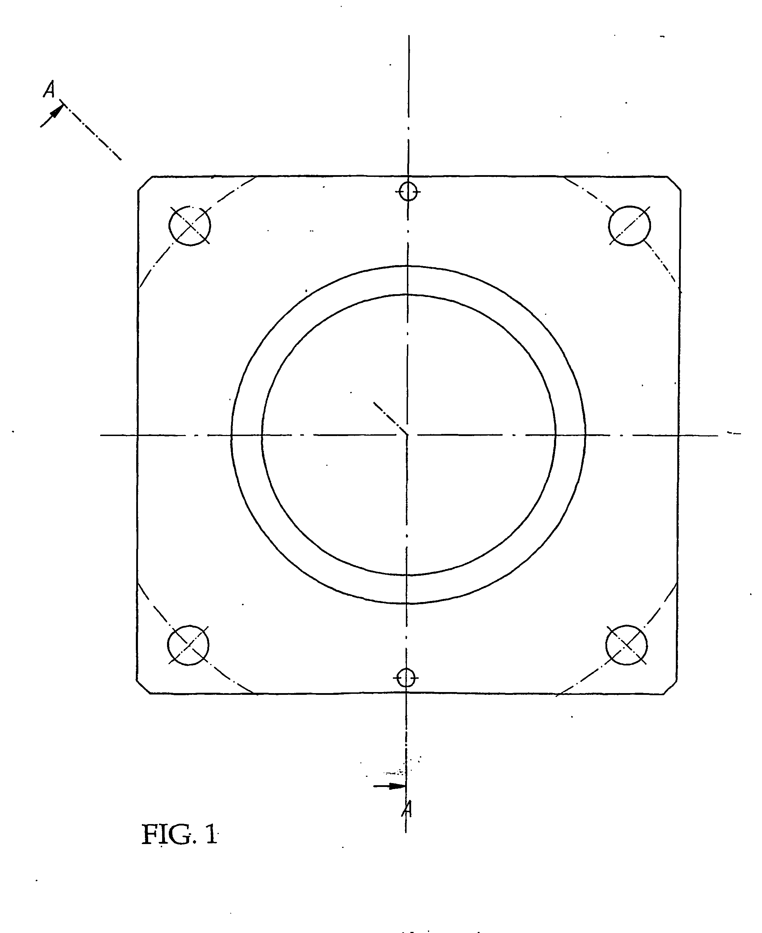

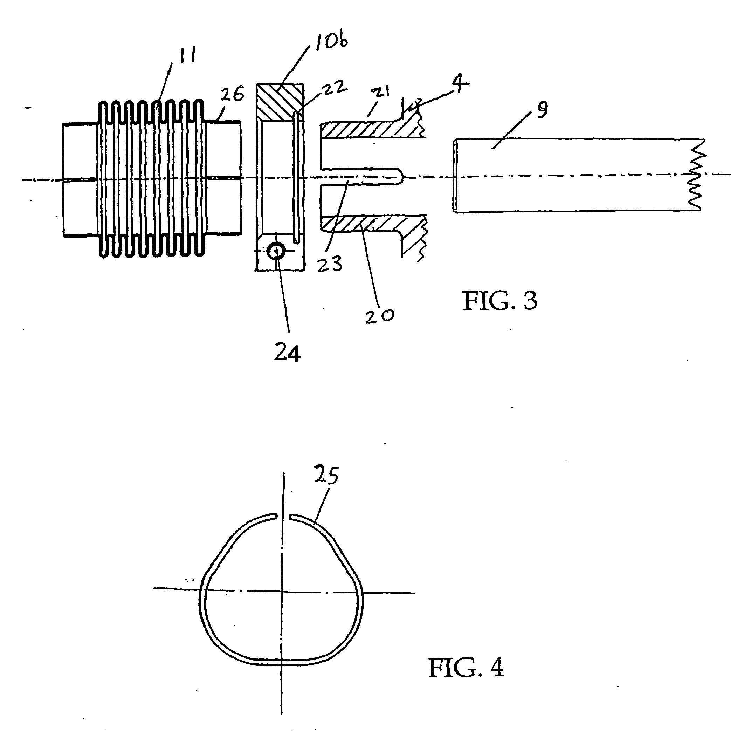

Referring to figure 3, there is shown an exploded view of a portion of the coupling and brake combination. The same or corresponding parts have been given the same reference numerals as in Figures 1 and 2. Figure 3 shows a motor shaft 9, and a hub 4 which supports a brake disk (not shown). The hub 4 is sized to fit on the motor shaft 9 and has key-ways (not shown) to prevent mutual rotation between the shaft 9 and the hub 4. The hub 4 has a longitudinally extending cylindrical sleeve portion 20 which has one or more longitudinal slits 23. It also has an outwardly facing annular groove 21 in its outer cylindrical surface. A metal bellows assembly 11 has a generally cylindrical right hand-end 26 sized to fit over the left-hand end of the cylindrical sleeve forming the extension 20 of the hub 4. The metal bellows assembly 11 is held in place on the extension 20 of the hub 4 by means of a locking ring 10b sized to fit around the cylindrical end 26 of the metal bellows 11. The locking ring 10b has an inwardly facing annular groove 22 in its inner surface, to receive a spring clip 25. The spring clip 25 is shown in Figure 4. As it is located in the annular groove 22, as the locking ring 10b is passed over the sleeve 20, but before it is tightened down, the spring clip 25 comes to rest in the outwardly facing annular groove 21. This serves to locate the locking ring 10b on the sleeve 20.

The locking ring 10b has a radial split or slot with a tangential bolt 24 passing across it. When the locking ring 10b is assembled and in place around the cylindrical end 26 to the metal bellows assembly 11, which in turn is in place on the cylindrical extension 20 of the hub 4, the bolt 24 can be tightened. This urges the radial slot in the locking ring 10b closed, which causes the ring to grip the cylindrical extension 26 of the metal bellows 11 against the outer surface of the extension 20 of the hub 4. The tightening also tends to urge the slot 23 in the cylindrical sleeve 20 of the hub 4 in a dosing direction, thereby causing the hub 4 to grip tightly against the motor shaft 9. Accordingly, the locking ring 10b serves a dual function of holding the metal bellows 11 to the brake hub 4 and also holding the brake hub 4 to the motor shaft 9. This is particularly advantageous because it dispenses with the need to provide a separate fixing means to prevent longitudinal movement of the brake hub 4 with respect to the motor shaft 9. The result is that the flexible coupling can be mounted closer to the motor. This is particularly advantageous in situations where there is a limited amount of available motor shaft, or a limited amount of space for the entire assembly. Such situations are common when a brake is being retrofitted to an existing installation. The coupling and brake combination in accordance with the present invention therefor saves a considerable amount of space and allows braking assemblies to be retrofitted to motors in spaces which were previously considered too small.

## Claims

1. A coupling and brake combination for a motor, preferably an electric motor, the brake having a flange (1) for directly connecting the combination to the correspondingly shaped part of the motor housing, wherein the brake is attachable by means of a hub (4) on the motor shaft (9) of the motor, **characterized in that** the hub (4) connects directly to a metal bellows coupling (11) for transmission of motor rotation to a second shaft and is provided with an outwardly axially projecting tube-like slotted projection (20) also mountable directly on the motor shaft (9) wherein the flexible metal bellows coupling (11) has a cylindrical gripping end which is mounted over the axially projecting tube-like slotted projection (20), a locking ring (10b) being provided to hold the cylindrical gripping end of the flexible metal bellows coupling to the projection (20) and simultaneously hold the projection (20) to the motor shaft (9).

2. A combination according to claim 1 **characterized in that** the end of the flexible metal bellows (11) remote from the motor shaft (9) is clamped to a second shaft (12) by being sandwiched between a split sleeve mounted on the shaft and a split locking ring (10a) clamping down on the outer circumference of the end of the said remote end of the bellows.

3. A combination in accordance with any preceding claim **characterized in that** the flange (1) comprises a housing accommodating the various components of the brake.

4. A combination in accordance with any preceding claim **characterized in that** the brake consists of an electromagnet coil (2), an armature plate (3), the hub (4), at least one brake disk (5), at least two brake pads (6) and at lest one spring (8) that presses the armature plate (3) in the braking direction.

5. A combination in accordance with any preceding claim **characterized in that** the flange (1) is rectangular, preferably square.

6. A method of retrofitting an electric motor by installing a brake and coupling combination in accordance with any preceding claim to the A bearing side of the motor.

## Patentansprüche

1. Kupplungs- und Brems-Kombination für einen Motor, vorzugsweise einen Elektromotor, bei der die Bremse einen Flansch (1) besitzt zum direkten Verbinden der Kombination mit einem entsprechend geformten Teil des Motorgehäuses, wobei die Bremse mittels einer Nabe (4) mit der Motorwelle (9) des Motors verbindbar ist, **dadurch gekennzeichnet, daß** die Nabe (4) direkt an eine Metallbalgkupplung (11) zur Übertragung der Motorrotation auf eine zweite Welle anschließt und mit einem auswärts axial vorstehenden rohrartigen geschlitzten Ansatz (20) versehen ist, der ebenfalls direkt auf der Motorwelle (9) anbringbar ist, wobei die flexible Metall-Balgkupplung (11) ein zylindrisches Greifende hat, welches über dem axial vorstehenden rohrartigen geschlitzten Ansatz (20) angeordnet ist, wobei ein Klemmring (10b) vorgesehen ist, um das zylindrische Greifende der flexiblen Metallbalgkupplung an dem Ansatz (20) zu halten und gleichzeitig den Ansatz (20) auf der Motorwelle (9) zu halten.

2. Kombination nach Anspruch 1, **dadurch gekennzeichnet, daß** das von der Motorwelle (9) entfernte Ende des flexiblen Metallbalgs (11) an eine zweite Welle (12) geklemmt ist, indem es zwischen einer auf der Welle angeordneten Schlitzhülse und einem geschlitzten Klemmring (10a) angeordnet ist, der den äußeren Umfang des Endes des entfernten Endes des Balgs einspannt.

3. Kombination nach einem der voranstehenden Ansprüche, **dadurch gekennzeichnet, daß** der Flansch (1) ein Gehäuse (1) umfaßt, welches die verschiedenen Komponenten der Bremse aufnimmt.

4. Kombination nach einem der voranstehenden Ansprüche, **dadurch gekennzeichnet, daß** die Bremse aus einer elektromagnetischen Spule (2), einer Ankerplatte (3), der Nabe (4), mindestens einer Bremsscheibe (5), mindestens zwei Bremsbelägen (6) und mindestens einer die Ankerplatte (3) in Bremsrichtung drückenden Feder (8) besteht.

5. Kombination nach einem der voranstehenden Ansprüche, **dadurch gekennzeichnet, daß** der Flansch (1) rechteckig, vorzugsweise quadratisch ist.

6. Verfahren zum Nachrüsten eines Elektromotors durch Installieren einer Brems- und Kupplungs-Kombination nach einem der voranstehenden Ansprüche an dem A-Lagerschild des Motors.

## Revendications

1. Combinaison accouplement et frein pour un moteur, de préférence un moteur électrique, le frein ayant une bride (1) pour connecter directement la combinaison à la partie formée de manière correspondante du carter de moteur, le frein pouvant être fixé au moyen d'un moyeu (4) sur l'arbre moteur (9) du moteur, **caractérisé en ce que** le moyeu (4) est connecté directement à un accouplement à soufflet métallique (11) pour une transmission de rotation motrice à un second arbre, et est muni d'une saillie fendue analogue à un tube faisant saillie axialement vers l'extérieur (20) pouvant être montée également directement sur l'arbre de moteur (9), l'accouplement à soufflet métallique flexible (11) ayant une extrémité de préhension cylindrique qui est montée par dessus la saillie fendue analogue à un tube faisant saillie axialement (20), un anneau de verrouillage (10b) étant prévu pour maintenir l'extrémité de préhension cylindrique de l'accouplement à soufflet métallique flexible sur la saillie (20), et pour maintenir simultanément la saillie (20) sur l'arbre moteur (9).

2. Combinaison selon la revendication 1, **caractérisé en ce que** l'extrémité du soufflet métallique flexible (11) éloignée de l'arbre de moteur (9) est bloquée sur un second arbre (12) en étant prise en sandwich entre un manchon fendu monté sur l'arbre et un anneau de verrouillage fendu (10a) qui se resserre sur la circonférence extérieure de l'extrémité de ladite extrémité éloignée du soufflet.

3. Combinaison selon l'une quelconque des revendications précédentes, **caractérisé en ce que** la bride (1) comporte un boîtier logeant les différents composants du frein.

4. Combinaison selon l'une quelconque des revendications précédentes, **caractérisé en ce que** le frein est constitué d'une bobine d'électro-aimant (2), d'une plaque d'induit (3), du moyeu (4), d'au moins un disque de frein (5), d'au moins deux plaquettes de frein (6) et d'au moins un ressort (8) qui presse la plaque d'induit (3) dans la direction de freinage.

5. Combinaison selon l'une quelconque des revendications précédentes, **caractérisé en ce que** la bride (1) est rectangulaire, de préférence carrée.

6. Procédé pour mettre à niveau un moteur électrique en installant une combinaison frein et accouplement selon l'une quelconque des revendications précédentes sur le côté de palier A du moteur.
